# EUROPÄISCHE PATENTSCHRIFT

(11) **EP 1 779 355 B1**
(45) Veröffentlichungstag und Bekanntmachung des Hinweises auf die Patenterteilung: **02.06.2010**
(21) Anmeldenummer: 05781686.0
(22) Anmeldetag: 09.08.2005
(51) Int. Cl.: G08G 1/16, B60Q 1/52

(54) **VORRICHTUNG ZUR AUSWERTUNG DER AUFMERKSAMKEIT EINES FAHRERS BEI EINEM KOLLISIONSVERMEIDUNGSSYSTEM IN KRAFTFAHRZEUGEN**
DEVICE FOR EVALUATING DRIVER ATTENTIVENESS IN A COLLISION PREVENTION SYSTEM IN MOTOR VEHICLES
DISPOSITIF POUR EVALUER L'ATTENTION D'UN CONDUCTEUR DANS UN SYSTEME ANTICOLLISION POUR VEHICULES AUTOMOBILES

(30) Priorität: 12.08.2004 DE 102004039305
(43) Veröffentlichungstag der Anmeldung: 02.05.2007
(73) Patentinhaber: Bayerische Motoren Werke Aktiengesellschaft, 80809 München (DE)
(72) Erfinder: KOPF, Matthias, 81245 München (DE); FARID, Nima, 80807 München (DE)
(86) Internationale Anmeldenummer: PCT/EP2005/008655
(87) Internationale Veröffentlichungsnummer: WO 2006/018195

(56) Entgegenhaltungen:
- EP-A- 0 549 909
- DE-A1- 10 132 386
- DE-A1- 10 311 518

## Beschreibung

Die Erfindung bezieht sich auf eine Vorrichtung zur Auswertung der Aufmerksamkeit eines Fahrers bei einem Kollisionsvermeidungssystem in Kraftfahrzeugen nach dem Oberbegriff des Patentanspruchs 1.

Es ist bereits allgemein bekannt, Kollisionswarnsysteme abhängig von der Wachheit eines Fahrers anzusteuern. Weiterhin sind eine Vielzahl von Systemen zur Erkennung der Wachheit eines Fahrers und eine Vielzahl von Kollisionsvermeidungssystemen, z. B. mit Notbremseingriff, bekannt. Beispielsweise geht ein Kollisionsvermeidungssystem mit Bremseingriff abhängig von der Wachheit des Fahrers aus der DE 198 01 009 C1 hervor.

Aus der EP-A-0 549 909 ist eine Warnvorrichtung für ein Fahrzeug bekannt, um eine Warnung für den Fahrer zu erzeugen, wenn der von einer Hinderniserfassungsvorrichtung erfasste Abstand unterhalb einer für den Fahrzeugabstand eingestellten Werts ist. Weiterhin ist eine Fahrerbedingungs-Erfassungsvorrichtung zur Erfassung des Zustands des Fahrers vorhanden, wobei die Fahrerbedingung-Erfassungsvorrichtung einen Wert für den Fahrzeugabstand einstellt, der in Übereinstimmung mit dem erfassten Zustand des Fahrers den Fahrzeugabstand erhöht, wenn der Fahrer eine Zusatzvorrichtung bedient.

Grundsätzlich besteht bei den bekannten Kollisionsvermeidungssystemen das Problem, dass gegebenenfalls Warnungen abgegeben oder Eingriffe vorgenommen werden, wenn der Fahrer sie nicht für notwendig hält, da er die Gefahrensituation schon selbst erkannt hat.
Es ist daher Aufgabe der Erfindung, Kollisionsvermeidungssysteme hinsichtlich der Akzeptanz bei den Fahrern zu verbessern.

Diese Aufgabe wird erfindungsgemäß durch eine Vorrichtung nach Patentanspruch 1 gelöst. Vorteilhafte Weiterbildungen sind die Gegenstände der abhängigen Ansprüche.

Bei der erfindungsgemäßen Vorrichtung zur Auswertung der Aufmerksamkeit eines Fahrers bei einem Kollisionsvermeidungssystem in Kraftfahrzeugen mit einem elektronischen Steuergerät, enthält das elektronische Steuergerät eine Zuordnungseinheit, die vorgegebene erste Eingangsdaten des Steuergeräts hinsichtlich der Erkennung einer bestimmten Fahrsituation aus mehreren vorgegebenen Fahrsituationen auswertet. Weiterhin enthält das elektronische Steuergerät eine mit der Zuordnungseinheit verbundene Fahrerbeobachtungseinheit, die vorgegebene zweite Eingangsdaten basierend auf der erkannten Fahrsituation hinsichtlich der Abschätzung des Grades einer situationsangepassten Aufmerksamkeit auswertet. Schließlich ist das Steuergerät derart ausgestaltet, dass mindestens eine Funktionseinheit des Kollisionsvermeidungssystems abhängig vom erkannten Grad der situationsangepassten Aufmerksamkeit angesteuert bzw. umparametrisiert wird.

Mögliche vorgegebene Fahrsituationen sind beispielsweise eine Freie-Fahrt-Situation", eine Auffahrsituation, eine Folgefahrtsituation, eine Überhol- oder Spurwechselsituation, eine Folge-Bremssituation, eine Einschersituation und/oder gegebenenfalls auch Kombinationen derartiger Situationen. Die vorgegebenen ersten Eingangsdaten sind beispielsweise Umwelt- und/oder Fahrzeugdaten, wie z. B. der Abstand zum vorausfahrenden Fahrzeug (Zielobjekt), die Fahrzeuggeschwindigkeit/ Beschleunigung/ Verzögerung des eigenen Fahrzeugs und/oder des Zielobjekts und/oder der Lenkwinkel. Die vorgegebenen zweiten Eingangsdaten, die teilweise auch dieselben Daten wie die vorgegebenen ersten Eingangsdaten sein können, sind insbesondere Fahrerverhaltensdaten, wie z. B. Lenkradbetätigung über Lenkwinkelerfassung, Gaspedal- und/oder Bremspedalbetätigung über hierzu bereits bekannte Sensoren, Blickbewegungen oder Gesten über Kamerasensoren, Blinkerbetätigung, Radiobedienung usw.). Insbesondere können hierbei also Eingangsdaten ausgewertet werden, durch die auf Bedientätigkeiten des Fahrers geschlossen werden können. Alternativ oder zusätzlich kann der Grad der situationsangepassten Aufmerksamkeit auch durch andere Verhaltensmuster des Fahrers, wie z. B. die Frequenz des Lidschlages oder die Körperaktivitäten, ermittelt werden. Derartige Auswertungen werden in bekannter Weise beispielsweise mittels im Fahrgastraum angeordneter Kamerasysteme durchgeführt. Auch kann der Puls des Fahrers durch im Lenkrad angeordnete geeignete Sensoren in bekannter Weise zusätzlich ermittelt werden.

Vorzugsweise wird der Grad der situationsangepassten Aufmerksamkeit basierend auf unterschiedlichen Aufmerksamkeitskategorien (z. B. Ablenkungskriterien, Absichtskriterien, modellbasierte Fahrerverhaltenskriterien, Wachheitskriterien) erkannt. Auswertungen über Radio-, Telefon oder Klimaanlagenbedienungen können beispielsweise in die Kategorie Ablenkungskriterien zur Auswertung der Aufmerksamkeit eingeordnet werden. Auswertungen über Lenkbetätigung, Blinkerbetätigung oder Blickänderung können beispielsweise in die Kategorie Absichtskriterien zur Auswertung der Aufmerksamkeit eingeordnet werden. Diese Auswertungen können jedoch auch für die Erkennung einer Fahrsituation verwendet werden. Auswertungen über den Zeitpunkt und die Stärke von Gas- oder Bremspedalbetätigungen oder über Gangwählhebelbetätigungen (Rückschaltungen) im Zusammenhang mit situationsspezifischen Reaktionszeitfenstern können beispielsweise in die Kategorie modellbasierte Fahrerverhaltenskriterien zur Auswertung der Aufmerksamkeit eingeordnet werden. Auswertungen über Lidschlag, Körperaktivitäten oder Puls können beispielsweise in die Kategorie Wachheitskriterien zur Auswertung der Aufmerksamkeit eingeordnet werden.

In einer weiteren vorteilhaften Weiterbildung der Erfindung wird der Grad der situationsangepassten Aufmerksamkeit in drei Bewertungsstufen eingeteilt. Beispielsweise können folgende Bewertungsstufen definiert werden:
I (nicht in Ordnung): der Fahrer reagiert falsch.
II (unbestimmt, Entscheidung kann nicht getroffen werden): die Reaktion des Fahrers ist nicht absehbar oder es liegt eine Fahrsituation vor, in der keine bestimmte Reaktion des Fahrers zu erwarten ist
III (in Ordnung): Fahrer reagiert richtig Insbesondere kann der Grad der Aufmerksamkeit auch in Form einer Wahrscheinlichkeit ausgedrückt werden, mit der der Fahrer falsch (I), unbestimmt (II) oder richtig reagiert (III).

Wichtig bei der Erkennung einer Fahrsituation ist die Erkennung, dass sich der Fahrer dieser Fahrsituation bewusst ist. D. h. der Fahrer hat diese Fahrsituation offensichtlich erfasst (passiv verursachte Fahrsituation) oder sogar absichtlich eingeleitet (aktiv verursachte Fahrsituation). Hierbei kann der Grad der Aufmerksamkeit, insbesondere der dieser Fahrsituation angepassten Aufmerksamkeit, in der unmittelbaren Vergangenheit eingehen.

Zum Beispiel wird eine (bewusste bzw. absichtliche) Überhol- oder Spurwechselsituation nur dann erkannt, wenn der Fahrer typisch für eine derartige Situation vorausschauend vor Erreichen eines kritischen Abstandes die Fahrgeschwindigkeit stetig (nicht abrupt) reduziert hat. Denn dann kann von einer überhol- oder spurwechselsituationsangepassten Aufmerksamkeit des Fahrers ausgegangen werden.

Zum Beispiel wird eine (bewusste bzw. vom Fahrer offensichtlich erfasste) Folgebremssituation nur dann erkannt, wenn der Fahrer typisch für eine derartige Situation vor der Betätigung der Bremse und gegebenenfalls der Abnahme des Abstandes zum Zielobjekt zunächst den Abstand zum Zielobjekt zumindest innerhalb bestimmter Grenzen konstant gehalten hat, und gegebenenfalls nach dem Beginn des Verzögerungsvorgangs des Vorderfahrzeugs innerhalb bestimmter Reaktionszeiten mit abstands- und verzögerungstypischen Handlungen auf die Situation reagiert hat.
Denn dann kann von einer folgebremssituationsangepassten Aufmerksamkeit des Fahrers ausgegangen werden. Wird eine bewusste Folgebremssituation erkannt werden, so können die weiteren Handlungen des Fahrers während dieser Situation als absichtliche Aktivitäten bewertet werden.
Bei Erkennung einer derartigen bewussten (absichtlichen oder vom Fahrer erfassten) Fahrsituation kann das Kollisionsvermeidungssystem eher weniger warnend oder weniger unterstützend angesteuert werden.

Bei unbestimmter oder niedriger situationsangepasster Aufmerksamkeit kann in den genannten Beispielfällen eher von einer unbewussten bzw. unabsichtlichen oder vom Fahrer nicht erfassten Auffahrsituation ausgegangen werden. Dies kann zu einer anderen eher warnenden oder unterstützenden Ansteuerung des Kollisionsvermeidungssystems führen.

Der Erfindung liegen folgende Erkenntnisse zugrunde:

Unter Kollisionsvermeidungssystemen sollen sowohl Kollisionswarnsysteme (mit optischen, akustischen oder haptischen Warnfunktionen) als auch aktiv eingreifende Kollisionsverhinderungssysteme (mit automatischem Brems- oder Lenkeingriff) verstanden werden. Ein grundlegendes Problem bei allen Kollisionsvermeidungssystemen ist die Tatsache, dass der aufmerksame Fahrer eine Warnung oder einen Eingriff entweder gar nicht oder später benötigt als ein unaufmerksamer Fahrer. Bekommt der aufmerksame Fahrer häufig eine Warnung oder einen Eingriff bei oder vor einer Gefahr, die er bereits selbst erkannt hat, kann die Akzeptanz und damit auch die Beachtung des Kollisionsvermeidungssystems stark abnehmen.

Es ist bereits allgemein bekannt, Kollisionswarnsysteme abhängig von der Wachheit eines Fahrers anzusteuern. Weiterhin sind eine Vielzahl von Systemen zur Erkennung der Wachheit eines Fahrers bekannt. Die bekannten Systeme berücksichtigen jedoch nicht, dass erstens in unterschiedlichen Fahrsituationen jeweils ein unterschiedlicher Grad der Aufmerksamkeit des Fahrers zum richtigen Reagieren erforderlich ist und dass zweitens in unterschiedlichen Fahrsituationen die Wahl unterschiedlicher Eingangsdaten zur Ermittlung der Aufmerksamkeit des Fahrers sinnvoll ist. Die Ermittlung der Aufmerksamkeit ist daher erfindungsgemäß fahrsituationsbezogen und ist insbesondere auf die Entscheidung ausgerichtet, ob der Fahrer bei gegebener Fahrsituation (mit hoher Wahrscheinlichkeit) richtig oder falsch reagiert bzw. reagieren wird. In der einschlägigen psychologischen Literatur wird dafür oft vom "richtigen Situationsbewusstsein" gesprochen.

In der Zeichnung ist ein Ausführungsbeispiel der Erfindung dargestellt. Es zeigt
- Fig. 1: eine schematische Darstellung der für die Erfindung erforderlichen Komponenten und Informationsflüsse,
- Fig. 2: ein Ausführungsbeispiel im Zusammenhang mit einer Überholsituation als erkannte Fahrsituation und
- Fig. 3: ein Ausführungsbeispiel im Zusammenhang mit einer Folgebremssituation als erkannte Fahrsituation.

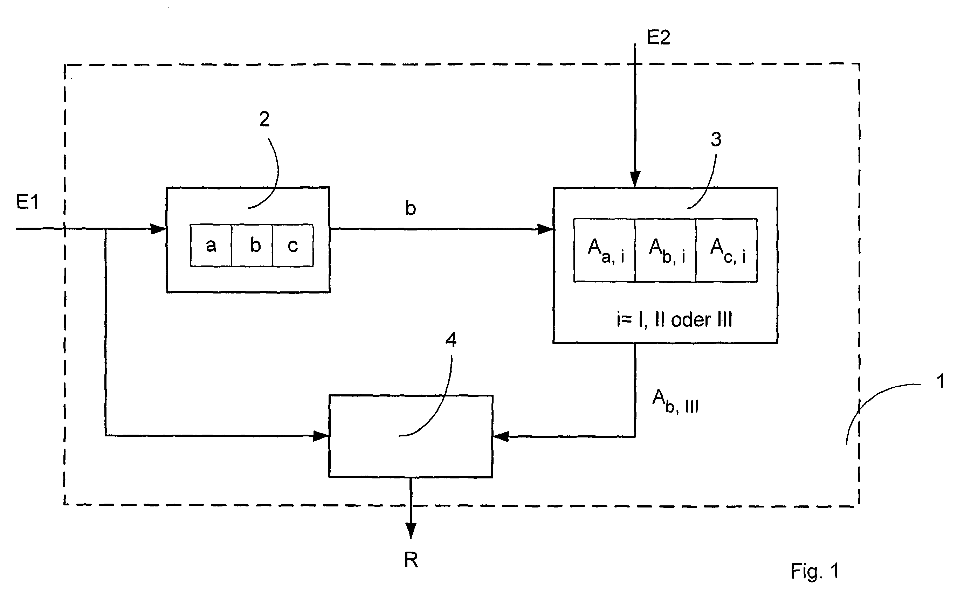

Ein elektronisches Steuergerät 1, das einem hier in Fig. 1 nicht vollständig dargestellten Kollisionsvermeidungssystem zugeordnet sein soll, enthält eine Zuordnungseinheit 2, die vorgegebene erste Eingangsdaten E1 des Steuergeräts 1 hinsichtlich der Erkennung einer bestimmten Fahrsituation aus den vorgegebenen möglichen Fahrsituationen a, b oder c auswertet. Hier sei beispielsweise die Fahrsituation a eine Auffahrsituation, die Fahrsituation b eine Folgefahrtsituation und die Fahrsituation c eine Spurwechselsituation. Die vorgegebenen ersten Eingangsdaten E1 seien beispielsweise Informationen über den Lenkwinkel, den Abstand zum vorausfahrenden Fahrzeug, den Gaspedalwinkel und die Bremspedalbetätigungskraft. Im dargestellten Beispiel sei anhand der Auswertung dieser ersten Eingangsdaten von der Zuordnungseinheit 2 die Fahrsituation b, also eine Folgefahrtsituation, erkannt worden.

Bei einer Folgefahrt ist vom Fahrer hinsichtlich einer richtigen Reaktion beispielsweise zu erwarten, dass er durch entsprechende Betätigung von Gaspedal und Bremspedal entweder eine Geschwindigkeit einhält, durch die der Abstand zum vorausfahrenden Fahrzeug nicht unter eine kritische Schwelle fällt, oder dass er durch entsprechende Betätigung von Blinker, Gaspedal und Lenkrad ein Überholmanöver einleitet. Diese erwarteten Reaktionen werden in der mit der Zuordnungseinheit 2 verbundenen Fahrerbeobachtungseinheit 3, die vorgegebene zweite Eingangsdaten E2 basierend auf der erkannten Fahrsituation b hinsichtlich der Abschätzung des Grades einer situationsangepassten Aufmerksamkeit A_{b,i} auswertet, überprüft.

Der Grad der situationsangepassten Aufmerksamkeit A_{b,i} wird mittels der Eingangsdaten E2 erkannt. Dabei werden die Bedientätigkeiten des Fahrers überwacht, die für die erkannte Fahrsituation b relevant sind. Zusätzlich kann der Grad der situationsangepassten Aufmerksamkeit A_{b,i} auch durch andere Verhaltensmuster des Fahrers, wie oben bereits ausgeführt, ermittelt werden.

Beispielweise kann hier der Grad der situationsangepassten Aufmerksamkeit A_{b,i} basierend auf folgenden Aufmerksamkeitskategorien erkannt werden:
Ablenkungskriterien: hinsichtlich der Bedienung von Geräten, die nicht für die erwartete richtige Reaktion nötig sind, wie Radio- oder Telefonbedienung; modellbasierte Fahrerverhaltenskriterien: wie Loslassen des Gaspedals und/oder Betätigung des Bremspedals zum situationsspezifisch richtigen Zeitpunkt;
Wachkeitskriterien: Geschwindigkeit des Loslassens des Gaspedals und/oder Ausmaß der Betätigung des Bremspedals.

Abhängig von dieser Auswertung der zweiten Eingangsdaten E2 wird der Grad der situationsangepassten Aufmerksamkeit A_{b,i} (mit i= I, II oder III) einer der oben bereits näher beschriebenen Bewertungsstufen I (falsche Reaktion), II (unbestimmte Reaktion) oder III (richtige Reaktion) zugeordnet.

Hierzu sind im Steuergerät in bekannter Weise Algorithmen, mathematische Schätzmodelle, Tabellen oder Kennfelder und datenbezogene Schwellen gespeichert.

Im vorliegenden Beispiel sei die situationsangepassten Aufmerksamkeit A_{b,III} ermittelt worden, die Ausgangssignal der Fahrerbeobachtungseinheit 3 und Eingangssignal der Funktionseinheit 4 des Kollisionsvermeidungssystems ist. Die Funktionseinheit 4 aktiviert bei einer in Bewertungsstufe III eingeordneten Aufmerksamkeit beispielsweise grundsätzlich keine Warnung und keinen Eingriff.

Vorzugsweise liegt nicht nur eine Funktionseinheit 4 zur Ansteuerung eines Aktuators R vor, sondern mehrere (hier nicht dargestellte) Funktionseinheiten, wie z. B. eine Funktionseinheit "akustisches Warnen" zur Ansteuerung eines ersten Aktuators und eine Funktionseinheit "Beschleunigungs- oder Verzögerungseingriff" zur Ansteuerung eines zweiten oder dritten Aktuators. Abhängig vom Grad der situationsangepassten Aufmerksamkeit können die Funktionseinheiten allein oder gemeinsam aktiviert bzw. umparametrisiert werden.

Beispielsweise können grundsätzlich abhängig von der Bewertungsstufe I, II, III unterschiedliche akustische Warnsignale (z. B. unterschiedlich hinsichtlich Lautstärke, Frequenz oder Einschaltzeitpunkt) oder unterschiedlich starke Eingriffbefehle abgegeben werden. Die Ansteuerung der Funktionseinheiten hängt aber vorzugsweise nicht nur von der Bewertungsstufe, sondern auch von der erkannten Situation ab. Beispielsweise können bei Vorliegen der der Folgefahrtsituation (Fahrsituation b) zugeordneten Aufmerksamkeit A_{b,l} mit Bewertungsstufe I (falsche Reaktion) die Funktionseinheiten anders angesteuert werden als bei Vorliegen der der Spurwechselsituation (Fahrsituation c) zugeordneten Aufmerksamkeit A_{c,l} mit Bewertungsstufe I.

Beispielsweise kann in einer ersten Fahrsituation bei Vorliegen einer situationsangepassten Aufmerksamkeit mit Bewertungsstufe I eine erste Funktionseinheit und eine zweite Funktionseinheit aktiviert werden und in einer ersten Fahrsituation bei Vorliegen einer situationsangepassten Aufmerksamkeit mit Bewertungsstufe II nur eine erste Funktionseinheit aktiviert werden. Die Funktionseinheiten können jedoch auch alternativ oder zusätzlich abhängig von der Bewertungsstufe hinsichtlich ihres Reaktionsausmaßes unterschiedlich angesteuert werden (z. B. in Fahrzustand b bei Bewertungsstufe I starker Bremseingriff und in Fahrzustand b bei Bewertungsstufe II geringer Bremseingriff).

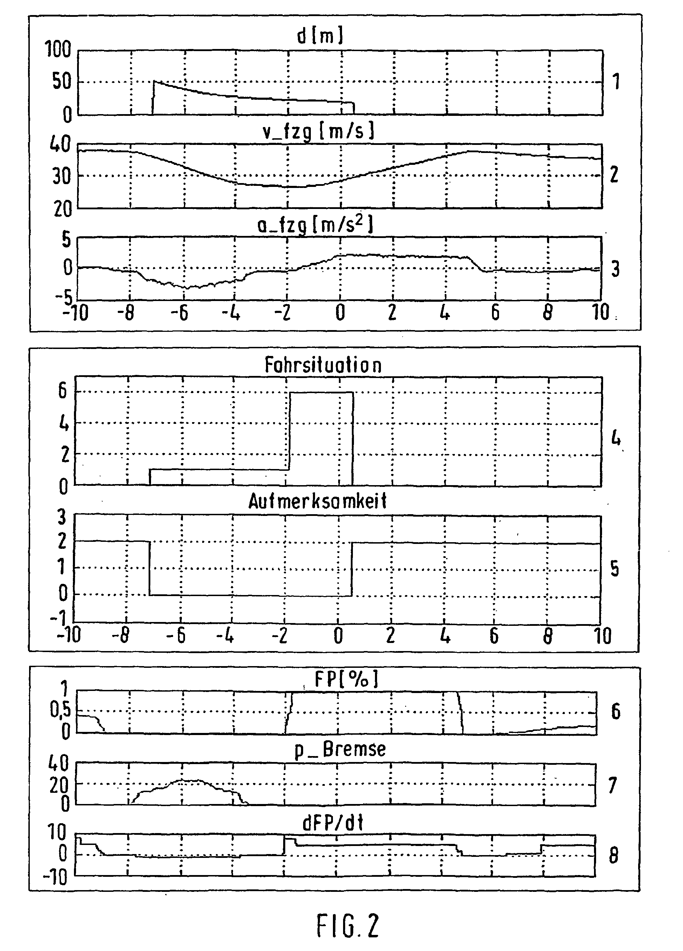

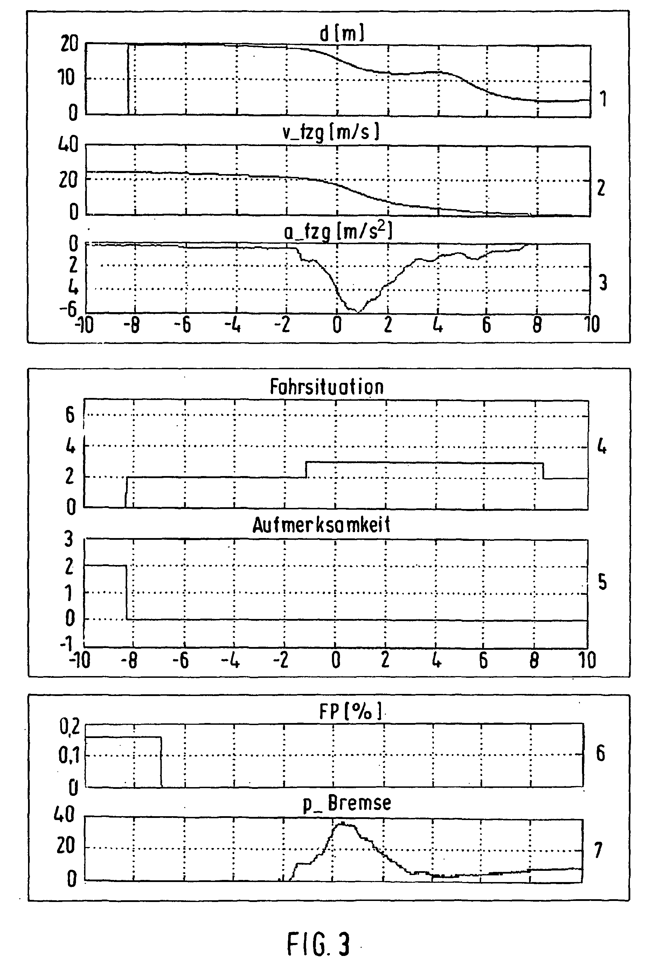

Die drei ersten Diagramme [1], [2] und [3] von Fig. 2 wie auch von Fig. 3 zeigen über der Zeit den Abstand d des eigenen Fahrzeugs zum Zielobjekt, die eigene Fahrzeuggeschwindigkeit v_fzg und die eigene Fahrzeugbeschleunigung a_fzg. Diese und gegebenenfalls noch weitere Informationen, wie die Relativgeschwindigkeit und/oder die Relativbeschleunigung hinsichtlich des Zielobjekts, sind beispielsweise die Eingangsdaten E1 der Zuordnungseinheit 2.

Die drei letzten Diagramme [6], [7] und [8] von Fig. 2 wie auch von Fig. 3 zeigen über der Zeit den Fahrpedalwinkel FP in einem Bereich von 0% (minimale Leistungsanforderung) bis 100 % (maximale Leistungsanforderung), den Bremsdruck p_Bremse und den Gradienten des Fahrpedalwinkels dF/dt (nur in Fig. 2 nicht in Fig. 3 dargestellt). Diese und gegebenenfalls noch weitere Informationen sind beispielsweise die Eingangsdaten E2 der Fahrerbeobachtungseinheit 3.

Die beiden mittleren Diagramme [4] und [5] von Fig. 2 wie auch von Fig. 3 zeigen die erkannte Fahrsituation und den Grad der Aufmerksamkeit. Im Diagramm [5] entspricht der Wert 0 der Bewertungsstufe III (richtige Reaktion), der Wert 1 der Bewertungsstufe I (falsche Reaktion) und der Wert 2 der Bewertungsstufe II (unbestimmte Reaktion) hinsichtlich der Aufmerksamkeit des Fahrers. Im Diagramm [4] entspricht beispielsweise der Wert 0 einer erkannten Freie-Fahrt-Situation, der Wert 1 einer erkannten Auffahrsituation, der Wert 2 einer erkannten Folgefahrtsituation, der Wert 3 einer erkannten Folgebremssituation und der Wert 6 einer erkannten (absichtlichen) Überhol- oder Spurwechselsituation. Der Wert 4 könnte beispielsweise einer Einschersituation und der Wert 5 einer Davonziehsituation jeweils bezogen auf das Zielobjekt zugeordnet sein.

Gemäß Fig. 2 wird am Beispiel einer Überholsituation als erkannte Fahrsituation eine mögliche Funktionsweise der Zuordnungseinheit 2 und der Fahrerbeobachtungseinheit 3 näher erläutert.

Zuerst wird gemäß Fig. 2 eine Freie-Fahrt-Situation beispielsweise dadurch erkannt, dass kein Zielobjekt in einem Abstand d von kleiner als 50 m erkannt wurde (siehe Diagramm [1]). Der Grad der Aufmerksamkeit ist zunächst auf dem Wert 2 (unbestimmt).

Nach der Freie-Fahrt-Situation wird eine (bewusste) Auffahrsituation gemäß Fig. 2 erkannt, da ein Zielobjekt in einem Abstand d von weniger als 50 m erkannt wurde. Gleichzeitig wurde die Aufmerksamkeit des Fahrers als hoch (richtige Reaktion) erkannt; denn der Fahrer hat bereits von dem Zeitpunkt an, zu dem der Abstand d 50 m unterschritten hat zuerst das Fahrpedal losgelassen (FP=0%) und dann einen Bremsdruck p_Bremse aufgebaut. Es wird also erkannt, dass sich der Fahrer der Auffahrsituation bewusst war. Somit kann beispielsweise bei dieser Auffahrsituation eine Warnung aufgrund des Unterschreitens eines vorgegebenen Sicherheits-Abstandes d unterdrückt werden.

Nach der (bewussten bzw. absichtlichen) Auffahrsituation wird eine Überhol- oder Spurwechselsituation gemäß Fig. 2 erkannt, da eine positive Fahrzeugbeschleunigung a nach einer kurzen Konstantfahrt und ein maximaler Gradient dF/dt der Fahrpedalbetätigung. Diese Überhol- oder Spurwechselsituation wird auch als bewusst bzw. absichtlich eingestuft, da vorausschauend vor Erreichen eines kritischen Abstandes zunächst die Fahrgeschwindigkeit v_fzg stetig reduziert wurde (zuerst Loslassen des Fahrpedals FP im Diagramm [6], danach Aufbau eines Bremsdruckes p_Bremse im Diagramm [7]). Die situationsangepasste Aufmerksamkeit wurde hier also als hoch eingestuft. Auch hier kann beispielsweise eine Warnung aufgrund des Unterschreitens eines vorgegebenen Sicherheits-Abstandes d oder aufgrund einer Spurverlassenserkennung unterdrückt werden.

Würde beispielsweise ausgehend von der zunächst bewussten Auffahrsituation die Aufmerksamkeit niedrig oder unbestimmt werden und dann eine positive Fahrzeugbeschleunigung a nach einer kurzen Konstantfahrt und ein maximaler Gradient dF/dt der Fahrpedalbetätigung festgestellt werden, würde keine bewusste oder absichtliche Überhol- oder Spurwechselsituation, sondern eher eine unabsichtliche Auffahrsituation erkannt werden, wodurch eine Warnung aktiviert werden würde, da damit keine situationsangepasste Aufmerksamkeit vorliegen würde.

Gemäß Fig. 3 wird am Beispiel einer Folgebremssituation als erkannte Fahrsituation eine mögliche Funktionsweise der Zuordnungseinheit 2 und der Fahrerbeobachtungseinheit 3 näher erläutert.

Zuerst wird eine Freie-Fahrt-Situation (Wert 0) gemäß Fig. 3 beispielsweise dadurch erkannt, dass kein Zielobjekt in einem Abstand d von kleiner als 50 m erkannt wurde (siehe Diagramm [1]). Der Grad der Aufmerksamkeit ist zunächst auf dem Wert 2 (unbestimmt).

Nach der Freie-Fahrt-Situation wird gemäß Fig. 3 nur ganz kurz eine Auffahrsituation (Wert 1) erkannt, da ein Zielobjekt in einem Abstand d von weniger als 50 m erkannt wurde. Die Erkennung einer Auffahrsituation wechselt jedoch sofort zu einer Folgefahrtsituation (Wert 2), da der Abstand d zunächst konstant bleibt (siehe Diagramm [1]). Da der Fahrer die Eigengeschwindigkeit v_fzg schon vorher konstant gehalten hat und weiterhin konstant hält, wird der Grad der folgefahrtsituationsangepassten Aufmerksamkeit als hoch (Wert 0, richtige Reaktion) bewertet. Es wird von einer bewussten Folgefahrtsituation ausgegangen.

Im folgenden lässt der Fahrer das Fahrpedal los (FP=0%), bevor der Abstand d weiter abnimmt. Vor der Betätigung der Bremse bzw. vor Aufbau des Bremsdruckes p_Bremse wird vom Fahrer zunächst der Abstand zum Zielobjekt konstant gehalten. Dadurch kann nach Betätigung der Bremse von einer folgebremssituationsangepassten Aufmerksamkeit des Fahrers ausgegangen werden. Schließlich betätigt der Fahrer die Bremse, bevor der Abstand d wesentlich abnimmt und passt den Bremsdruck p_Bremse an den abnehmenden Abstand d an. Es wird eine bewusste bzw. vom Fahrer offensichtlich erfasste Folgebremssituation (Wert 3) erkannt, da mit der erkannten situationsangepassten Aufmerksamkeit gleichzeitig auch durch die Bremsbetätigung des Fahrers die Fahrzeuggeschwindigkeit v_fzg an den Abstand d angepasst wird. Auch hier kann beispielsweise eine Warnung aufgrund des Unterschreitens eines vorgegebenen Sicherheits-Abstandes d unterdrückt werden. Wäre der Grad der Aufmerksamkeit vor einer Bremsbetätigung und der Abnahme des Abstands d unbestimmt oder niedrig, würde anstelle einer bewussten Folgebremssituation eine unbewusste Auffahrsituation erkannt werden.

Generell werden also vorzugsweise zur Bewertung einer Fahrsituation ausgehend von den Eingangsdaten E1 insbesondere auch die Eingangsdaten E2 der unmittelbaren Vergangenheit und/oder die Aufmerksamkeit der unmittelbaren Vergangenheit betrachtet.

Durch die Erfindung können Kollisionsvermeidungssysteme hinsichtlich der Kundenakzeptanzkriterien verbessert werden.

## Patentansprüche

1. Verfahren zur Auswertung der Aufmerksamkeit eines Fahrers bei einem Kollisionsvermeidungssystem in Kraftfahrzeugen mittels eines elektronischen Steuergeräts (1) zur Erkennung einer bestimmten Fahrsituation aus mehreren vorgegebenen Fahrsituationen und zur Abschätzung des Grades einer situationsangepassten Aufmerksamkeit basierend auf der erkannten Fahrsituation, wobei
eine Warnung aufgrund des Unterschreitens eines vorgegebenen Sicherheits-Abstandes (d) unterdrückt wird, wenn nach einer Freie-Fahrt-Situation eine Auffahrsituation mit hoher Aufmerksamkeit **dadurch** erkannt wird, dass vom Fahrer bereits vor Unterschreiten des vorgegebenen Sicherheits-Abstandes (d) zum Zielobjekt die Fahrgeschwindigkeit (v_fzg) stetig reduziert wurde.

2. Verfahren nach Anspruch 1,
**dadurch gekennzeichnet, daß** nach einer Auffahrsituation mit erkannter hoher Aufmerksamkeit eine Überhol- oder Spurwechselsituation mit hoher Aufmerksamkeit an einer positiven Fahrzeugbeschleunigung (a_fhg) nach einer kurzen Konstantfahrt und einem maximalen Gradienten (dFP/dt) der Fahrpedalbetätigung erkannt wird.

3. Verfahren nach Anspruch 1 oder 2, **dadurch gekennzeichnet,**
**daß** eine stetige Reduktion der Fahrtgeschwindigkeit erkannt wird wenn der Fahrer zuerst das Fahrpedal losgelassen und dann einen Bremsdruck (p_Bremse) aufgebaut hat.

4. Verfahren zur Auswertung der Aufmerksamkeit eines Fahrers bei einem Kollisionsvermeidungssystem in Kraftfahrzeugen mittels eines elektronischen Steuergeräts (1) zur Erkennung einer bestimmten Fahrsituation aus mehreren vorgegebenen Fahrsituationen und zur Abschätzung des Grades einer situationsangepassten Aufmerksamkeit basierend auf der erkannten Fahrsituation, wobei
eine Warnung aufgrund des Unterschreitens eines vorgegebenen Sicherheits-Abstandes (d) unterdrückt wird, wenn eine Folgebremssituation mit hoher Aufmerksamkeit erkannt wird, wenn vom Fahrer vor der Betätigung der Bremse und gegebenenfalls der Abnahme des Abstandes (d) zum Zielobjekt zunächst der Abstand (d) zum Zielobjekt zumindest innerhalb bestimmter Grenzen konstant gehalten wurde.

5. Verfahren nach einem der vorangegangenen Patentansprüche, **dadurch gekennzeichnet, dass** der Grad der situationsangepassten Aufmerksamkeit basierend auf unterschiedlichen Aufmerksamkeitskategorien erkannt wird.

6. Verfahren nach einem der vorangegangenen Patentansprüche, **dadurch gekennzeichnet, dass** der Grad der situationsangepassten Aufmerksamkeit in drei Bewertungsstufen (I, II, III) eingeteilt wird.

## Claims

1. A method for evaluating the attentiveness of a driver in a collision avoidance system in motor vehicles by means of an electronic control device (1) for recognising a specific driving situation from a plurality of predetermined driving situations and for estimating the degree of a situation-adapted attentiveness based on the recognised driving situation, wherein a warning based on falling below a predetermined safety distance (d) is suppressed if after an open road driving situation, a collision situation is recognised with a high degree of attentiveness in that the driving speed (v_fzg) was already steadily reduced by the driver before falling below the predetermined safety distance (d) from the target object.

2. A method according to claim 1, **characterised in that** after a collision situation with a recognised high degree of attentiveness, an overtaking or lane changing situation with a high degree of attentiveness is recognised by a positive vehicle acceleration (a_fhg) after a short period of constant travel and a maximum gradient (dFP/dt) of the accelerator operation.

3. A method according to claim 1 or 2, **characterised in that** a steady reduction of the driving speed is recognised if the driver has firstly released the accelerator and then built up a braking pressure (p_brake).

4. A method for evaluating the attentiveness of a driver in a collision avoidance system in motor vehicles by means of an electronic control device (1) for recognising a specific driving situation from a plurality of predetermined driving situations and for estimating the degree of a situation-adapted attentiveness based on the recognised driving situation, wherein a warning based on the falling below of a predetermined safety distance (d) is suppressed if a follow-on braking situation with a high degree of attentiveness is recognised if the distance (d) from the target object has firstly been kept constant at least within certain limits by the driver before the operation of the brake and optionally the reduction in the distance (d) from the target object.

5. A method according to any one of the preceding claims, **characterised in that** the degree of situation-adapted attentiveness is recognised based on different categories of attentiveness.

6. A method according to any one of the preceding claims, **characterised in that** the degree of situation-adapted attentiveness is divided into three evaluation stages (I, II, III).

## Revendications

1. Procédé d'évaluation de l'attention d'un conducteur dans un système anticollision de véhicule comportant un appareil de commande électronique (1) pour reconnaître une certaine situation de conduite parmi plusieurs situations de conduite, prédéfinies et pour évaluer le degré d'attention adapté à la situation en fonction de la situation de conduite détectée,
selon lequel
on élimine un avertissement résultant du dépassement vers le bas d'une distance de sécurité (d), prédéfinie si après une situation de conduite libre, on reconnaît une situation de collision avec une attention élevée, en ce que la vitesse de conduite (v_fzg) a été réduite de manière continue, dès avant le dépassement vers le bas de la distance de sécurité (d), prédéfinie par rapport à l'objet cible.

2. Procédé selon la revendication 1,
**caractérisé en ce qu'**
après une situation de collision avec une attention élevée reconnue, on reconnaît une situation de dépassement ou de changement de voie avec une attention élevée par une accélération positive (a_fhg) du véhicule après un déplacement bref constant, et un gradient maximum (dFP/dt) de l'actionnement de la pédale d'accélérateur.

3. Procédé selon la revendication 1 ou 2,
**caractérisé en ce qu'**
on reconnaît une réduction continue de la vitesse de déplacement si le conducteur a tout d'abord relâché la pédale d'accélérateur, puis a généré une pression de frein (p_Bremse).

4. Procédé d'exploitation de l'attention d'un conducteur dans un système anticollision de véhicule à l'aide d'un appareil de commande électronique (1) pour reconnaître une certaine situation de conduite parmi plusieurs situations de conduite prédéfinies et pour évaluer le degré d'attention adapté à la situation, fondée sur une situation de conduite, reconnue,
selon lequel
on élimine l'avertissement fondé sur le dépassement vers le bas d'une distance de sécurité (d) prédéfinie si une situation de freinage successive est reconnue avec une attention élevée, et si le conducteur, avant d'actionner le frein et le cas échéant la diminution de la distance (d) par rapport à l'objet cible, la distance (d) par rapport à l'objet cible, a tout d'abord été maintenue de manière constante dans des limites déterminées.

5. Procédé selon l'une des revendications précédentes,
**caractérisé en ce que**
le degré d'attention adapté à la situation est reconnu en fonction des différentes catégories d'attention.

6. Procédé selon l'une des revendications précédentes,
**caractérisé en ce qu'**
on subdivise le degré d'attention adapté à la situation dans trois classes d'évaluation (I, II, III).
